# EUROPEAN PATENT APPLICATION

(11) **EP 3 576 182 A1**
(43) Date of publication of application: **04.12.2019**
(21) Application number: 18382379.8
(22) Date of filing: 31.05.2018
(51) Int. Cl.: H01M 2/12

(54) **PROTECTIVE DEVICE FOR A BATTERY CELL**

(71) Applicant: Airbus Operations, S.L.U., 28906 Getafe (Madrid) (ES)
(72) Inventor: BAREAUD, Patrick, E-28906 Getafe, Madrid (ES)
(74) Representative: ABG Intellectual Property Law, S.L.

(57) **Abstract**

The present invention provides a protective device for a battery cell comprising: a metallic jacket adapted to airtighly cover the battery cell, spacers arranged between the jacket and the battery cell maintaining a separation therebetween, and a venting mechanism adapted to release the electrochemical material under a predetermined condition.

## Description

### TECHNICAL FIELD OF THE INVENTION

The present invention belongs to the field of safe electrical power generation, and particularly, it belongs to the field of protective barriers for battery cells usage on aircrafts in case a malfunction takes place thereon.

In particular, the invention provides a protective device for battery cells in order to safely evacuate the housed electrochemical material upon degradation, being the electrochemical material converted into high temperature and pressure gas by a malfunction of the battery cell.

### BACKGROUND OF THE INVENTION

A battery cell is a device comprising electrochemical material housed in a can and able to convert chemical reaction directly into electrical energy. Also, the battery cell comprises electrical terminals, the *so-called* electrodes, wherein normally positive ('+', anode) and negative ('-', cathode) terminals are present. The terminals are 'connected' by the electrochemical material (configured to conduct electrical current), thus taking place a specific chemical reaction known as a 'redox' (i.e. *reduction-oxidation)* reaction. Briefly, this reaction causes reduction (i.e. electron addition) at one terminal (*cathode*) and oxidation (i.e. electron removal) at the other terminal (*anode*).

In aviation, battery cells usually form part of the Aircraft Electrical System, being used primarily to power up the electrical system during preflight, for aircraft startup, and as an emergency source of power in the event of a generation or distribution system failure.

Nevertheless, battery cells usage on aircrafts are subject to malfunctions, either
- caused by inherent damage of the cell (i.e. manufacturing defects or inappropriate handling) such as an internal failure or short circuit, or
- induced by external factors such as battery overcharging (because of a faulty charging equipment) or excessive battery charging/discharge rates as some battery cells are vulnerable to high rates of charge or discharge, respectively. For example, a battery cell charged too quickly could cause local internal overheat leading to internal insulator failure causing a short circuit, which may lead to explosion and fire if the electrochemical material is flammable. Further, induced external heat may compromise the correct working of the electrochemical material.

In general, those malfunctions lead to an internal increase of temperature of the battery cell, which normally modifies the electrochemical material into high temperature and pressure gas. Thus, heat and overpressure is generated inside the can of the battery cell and, upon surpassing a limit temperature, a chain reaction is triggered. Hence, the structural integrity of the can is jeopardized.

A conventional solution present in the state of the art is that the battery cell further comprises an overpressure venting valve at one end configured to release the electrochemical material converted into high temperature and pressure gas once a predetermined pressure inside the can is reached. In most cases, such overpressure venting valve allows routing the hazardous gases to a conditioned zone.

In case such overpressure venting valve misbehaves by any reason therefore not allowing the proper venting of the hazardous gases, these remains inside the can continuing the chain reaction. A 'thermal runaway' starts as the increase in temperature changes the conditions in a way that causes a further increase in temperature of the gases. This positive feedback often gives rise to a destructive result in which the gases escapes from the can by the weakest mechanical area of the can, posing the problem that hot gases (at high pressure) may contact non-intended systems instead of the intended conditioned zone.

A solution to the foregoing is theoretically achieved by making the cell's can self-contained, thus stiffening the weak areas thereof by thickness increase. This entails a weight and volume increase which may difficult its implementation.

With the advent of Li-ion battery cells usage on aircrafts, all of this is emphasized. As one of the keys of Li-ion battery cells are their high energy density (especially suitable in aeronautics), the option of making the cell's can self-contained is currently not feasible.

### SUMMARY OF THE INVENTION

The present invention provides a solution for the aforementioned problems, by a protective device for a battery cell according to claim 1, an assembly according to claim 11, and an aircraft according to claim 15. In dependent claims, preferred embodiments of the invention are defined.

In a first inventive aspect, the invention provides a protective device for a battery cell, the battery cell comprising electrical terminals and a can which houses the electrochemical material thereof, the protective device comprising:
- a jacket, preferably metallic, adapted to airtighly cover the can of the battery cell,
- at least one spacer arranged between the jacket and the can of the battery cell, wherein the at least one spacer is configured to maintain a separation therebetween, and
- a venting mechanism adapted to release the electrochemical material under a predetermined condition.

Throughout this entire document, 'battery cell' should be understood as any electrochemical cell that derives electrical energy from a spontaneous redox reaction taking place within the cell, or in other words, the battery cell is a unitary electrochemical device able to generate electrical energy from chemical reaction. Accordingly, the 'battery cell' may comprise more than one cell connected either in series or parallel, forming a *so-called* "battery pack".

As mentioned, in case a malfunction of the battery cell occurs, this give rise to an internal increase of temperature of the battery cell, and the electrochemical material undergoes a conversion into high temperature and pressure gas. Therefore, throughout this entire document, 'electrochemical material' refers to both the electrochemical material working as an electrolyte (being housed in the can and able to convert chemical energy directly into electrical energy), and the gas produced during a malfunction of the battery cell.

Thus, once heat and overpressure is generated inside the can of the battery cell triggering a chain reaction, the 'thermal runaway' starts and the gases are to escape from the can somehow (normally, by an overpressure venting valve of the battery cell, or by the weakest mechanical area of the can). This situation gives rise that hot gases (at high pressure) may contact non-intended systems in an uncontrolled manner.

To prevent the uncontrolled escaping of hot gases to a zone other than an intended conditioned zone, the present invention provides a jacket which airtightly surrounds the can of the battery cell, and thus it is configured to retain the hot gases therein.

The presence of at least one spacer allows that the hazardous hot gases escaping from the can of the battery cell accumulates within the separation. Thus, as the volume increases (i.e. from the volume of the can alone to the volume of the can plus the volume of separation), the separation provides an airgap which acts as a decompression chamber being the thermodynamic properties of the hazardous gases (i.e. mainly pressure and temperature) reduced, accordingly.

The venting mechanism provides an exit opening of the hot gases being released from the protective device upon a predetermined condition takes place.

Advantageously, the synergistic combination of a kind of casing (e.g. the jacket) and the spacers providing airgaps for acting as decompression chambers, allows the secure containment of the chemical material (converted into hazardous gases) of the battery cell even if a rupture of the can has been produced (by a malfunction thereof). To avoid a prolonged containment in time of hot gases within the jacket, the venting mechanism provides a concrete releasing point to securely routing the hot gases in a controlled manner.

Therefore, the solution present in the State-of-Art of making the can self-contained is avoided, and thus the present invention avoids the simple stiffening of elements of the battery cell or protective devices which shall incurs on weight and volume increase of the battery cell.

Apart from the reduction of hot gases severity by lowering its thermodynamic properties (as the gases are expanded in the separation between the can and the jacket); the spacers also provide a vibration mitigation mechanism. Thus, the spacers according to the invention provide a dual function.

Since the jacket is attached to the terminals of the battery cell, in the absence of the spacers, vibrations induced by outer systems (for example, the aircraft *per se*) shall be transferred to the jacket which started vibrating and may put in risk the integrity of the protective device. Advantageously, the spacers are configured to absorb the vibration induced and mitigate thereof, accordingly.

The person skilled in the art may recognize that the present protective device is applicable to any kind of battery cell, and being designed with or without an overpressure venting valve. Also, it is irrespective what the mechanical shape and the electrical configuration of the battery cell are.

Particularly, the present invention is of special application in those battery cells subject to 'thermal runaway' in case of a malfunction.

In a preferred embodiment, the battery cell usable with the protective device of the present invention is a Li-ion battery cell (preferably to be used on aircrafts).

Li-ion battery cells are one of the most popular types of rechargeable batteries (the *so-called* 'secondary batteries') for electronics, for instance. Among their advantages, it can be pointed out their high energy density (understood as the amount of energy that can be stored per unit volume), a tiny memory effect (understood as the phenomenon in which a cell, if discharged in successive cycles to a point that is less than its full depth of discharge, will temporarily lose the remainder of its capacity) and low self-discharge.

Due to their high energy density, they are of special interest in aeronautics where minimum possible volume and weight are stressed. Hence, it is clear that the alternative possibility of making the batteries self-containing (as prior art does) is deemed not plausible.

In a particular embodiment, the protective device is such that:
- the jacket comprises a top cover, and
- the protective device further comprises electrical prolongations, each of them adapted to attach single electrical terminal of the battery cell, and wherein the length of each electrical prolongation allows protruding out of the top cover of the jacket.

The top cover of the jacket is offset from the can. Therefore, in order to ensure electrical continuity of the terminals of the battery cell with respective connectors, the protective device comprises an electrical prolongation for each single electrical terminal of the battery cell in order to stretch the same. Also, for ensuring a correct electrical connection with the respective connectors, such electrical prolongation comprises a length such that they protrude out of the top cover of the jacket.

Advantageously, the offset between the top cover of the jacket and the can also assist the expansion of the hazardous gases within the separation.

In a particular embodiment, the protective device further comprises an electrical insulator, the electrical insulator being arranged in the interface between the top cover of the jacket and at least one electrical prolongation in order to prevent their direct contact, preferably the protective device comprising an electrical insulator for each of the electrical prolongations.

This particular embodiment is of special interest in case the top cover of the jacket is metallic (or the entire jacket) as the terminals (or the electrical prolongations attached thereon) of the battery cell should not be in contact between them.

A collateral function of the electrical insulators is to maintain the airtight of the jacket for preventing the hot gases to escape from the terminals interface area with the top cover of the jacket *per se.*

Accordingly, the electrical insulator is characterized in that it allows maintaining a sufficient electrical resistance at the interface as long as the mentioned airtight in guaranteed. Further, since most of battery cells have a very low own voltage (of a few volts), the electrical insulator may be substantially thin and still fulfilling the above requirements.

In a preferred embodiment, the electrical insulator is made of at least one of the following materials: polypropylene, PTFE, Teflon-based, PVC, polyimide, or the like.

In a particular embodiment, the venting mechanism is a first overpressure venting valve adapted to release the electrochemical material under a first predetermined pressure upon accumulation in the separation between the jacket and the can of the battery cell.

It should be noted that the jacket is completely closed if no hot gases escaped from the can of the battery cell; this is, in case no malfunction of the battery cell takes place.

In a particular embodiment, the venting mechanism is a hinged flap adapted to co-jointly open with the opening of an overpressure venting valve of the battery cell in order to release the electrochemical material of the battery cell.

In this particular embodiment, the battery cell comprises an overpressure venting valve (named as 'second overpressure venting valve' later on in the description) as a safety barrier to allow discharging the hot gases. Accordingly, if no misbehavior of such second overpressure venting valve takes place, the venting mechanism of the protective device shall also allow discharging the same hot gases. Thus, both valve and flap cooperate to co-jointly open upon opening of the second overpressure venting valve of the battery cell.

In a particular embodiment, the at least one spacer is a ring-shaped spacer adapted to securely embrace the can of the battery cell.

Advantageously, this allows a better securing of the spacer with the can of the battery cell and, therefore, improves vibration mitigation and structural integrity of the protective device.

The depth of each ring-shaped spacer shall be enough so as to mitigate vibrations.

In a particular embodiment, the at least one spacer comprises at least one cutout configured to allow the electrochemical material to pass through it.

Advantageously, these cutouts provide a routing to expand as much as possible the hot gases within the separation provided. In a preferred embodiment, at least one spacer comprises cutouts homogenously distributed over it.

In case the spacers are ring-shaped spacers, these cutouts form a teeth profile around the periphery of the spacers. The cutouts are, preferably, substantially circular forming a concave 'flanks' of the teeth profile. It is to be noted that the head of each tooth is according to the radius of the jacket in order to make contact.

In a preferred embodiment, the proportion between cutouts (i.e. free material) and teeth is 50/50 *per cent* in volume. This is, the cutouts represent a volume substantially equal to the volume of the teeth within a particular spacer.

Preferably, this teeth profile comprises a number between 6 and 12 teeth homogeneously distributed along the 360°, thus being spaced between them by the cutouts.

More preferably, in case the cross-section of the can housing the electrochemical material is substantially circular, the head of the teeth goes beyond the diameter of the can up to 15-30%. It is noticed that, in case the can comprise another cross-sectional shape; such increment of 15-30% in diameter will be transformed into the equivalent number in area.

Then, the depth of each ring-shaped spacer will be subject to the head thereof. In a particular embodiment, the at least one spacer is made of one of the followings:
metallic material, such as aluminum, or
polymeric material, or
reinforced polymeric material, such as glass fiber reinforced plastic.

Preferably, the at least one spacer is made of metallic material which better withstands the high temperature induced by the hot gases without being degraded.

Nevertheless, other materials less resistant to high temperatures are envisaged within the invention since the time elapsed between the gases escaping from the can into the separation, and released afterwards to outside, normally does not take long. Accordingly, thermodynamic analysis of the process shall indicate, among others, the temperature gradient, and gases path, which may be tuned-up by simulating over different materials. The outcome will point out acceptable deformation of the spacer (for each material simulated) and the cost associated.

Therefore, since the present invention aims not to add extra-weight unnecessarily (specially addressing aeronautics), the ultimate material is chosen as a compromise solution stressing economics and weight.

In a particular embodiment, the at least one spacer is made of a flexible material configured to swell upon contacting the accumulated electrochemical material between the jacket and the can of the battery cell, the separation therebetween being increased.

In this particular embodiment, each spacer is filled with or made of a material able to swell upon being heated. The hot gas produced by a malfunction of the battery cell transfer heat to the spacer, and thus its temperature is increased. Accordingly, the filling material (or the spacer *per se*) increase its volume and exerts a pressure on the internal face of the jacket, thus trying to increase its diameter.

In this particular embodiment, the jacket is configured to change its diameter, for example, being made of a slightly elastic material or by a set of longitudinal blades able to slid between them maintaining the airtight capacity.

In a particular embodiment, the venting mechanism is adapted to release the electrochemical material towards an intended exhaust zone outside the protective device.

In this particular embodiment, the venting mechanism is connected to a guiding means such as piping in order to guide the hot gases released to an intended exhaust zone, conditioned to evacuate them. A person skilled in the art will recognize that this exhaust zone may be either a remote system confined within the aircraft or the ram air outside the aircraft.

Advantageously, this allows securely routing the hot gases from a concrete releasing point (i.e. the venting mechanism) in a controlled manner, instead of contacting non-intended systems which may raise a fault cascade among systems.

In a second inventive aspect, the invention provides an assembly comprising:
- a protective device according to any of the embodiments of the first inventive aspect, and
- a battery cell, preferably a Li-ion battery cell, the battery cell comprising electrical terminals and a can which houses the electrochemical material thereof.

Briefly, as it was already mentioned, this Li-ion battery cell comprises two electrical terminals (positive, '+') and (negative, '-'), and a can in turn housing the electrochemical material therein.

In a preferred example, this can is a metallic case holding a long spiral comprising three thin sheets pressed together; this is, a positive electrode, a negative electrode, and a separator. Inside such can, these sheets are submerged in an organic solvent that acts as the electrolyte, for instance ether.

In a preferred embodiment, the separator is a very thin sheet of microperforated plastic, which separates the positive and negative electrodes while allowing ions to pass through. In this sense, the positive electrode is made of Lithium cobalt oxide, or *LiCoO₂.* On the other hand, the negative electrode is made of carbon. When the battery charges, ions of lithium move through the electrolyte from the positive electrode to the negative electrode and attach to the carbon. During discharge, the lithium ions move back to the LiCoO₂ from the carbon. The movement of these lithium ions happens at a high voltage, so each cell produces 3.7 volts.

In a particular embodiment, the battery cell further comprises a second overpressure venting valve configured to release the electrochemical material converted into high temperature and pressure gas by a malfunction of the battery cell under a second predetermined pressure.

As it has been already mentioned, most of battery cells are pressurized into a can (*so-called* outer case), and the second overpressure venting valve may be understood as a pressure-sensitive vent hole. This mechanism is known as the Positive Temperature Coefficient (PTC) switch, this is, a device that is supposed to keep the battery from overheating.

Once 'thermal runaway' has started, and the gases are to escape from the can by such overpressure venting valve of the battery cell, the explosion risk increases due to over-pressure, this the second overpressure venting valve being in charge of releasing such extra pressure.

In a particular embodiment, the first predetermined pressure of the electrochemical material accumulated within the separation configured to open the first overpressure venting valve is less than the second predetermined pressure configured to open the second overpressure venting valve.

Preferably, the first predetermined pressure is slightly greater than the ambient pressure outside the protective device.

For example, in case the protective device is installed on an aircraft, during operation in decompressed ambient, the pressure difference is approx. 0,5 bar. Then, the first overpressure venting valve should act by a first predetermined pressure greater but close to 0,5 bar; preferably between 0,5 bar and 1 bar.

Instead, the second predetermined pressure valves of battery cells usage on aircrafts are designed to open by a minimum pressure of 1 bar (existing aircrafts comprise battery cells designed to open at 2.2 bar absolute pressure as minimum).

In a particular embodiment, the ratio between the first predetermined pressure and the second predetermined pressure is between 0,75 to 0,5.

This is, in a preferred embodiment:
- max. first predetermined pressure: 2 bar;
- min. first predetermined pressure: 1,5 bar;
- max. second predetermined pressure: >=4 bar; and
- min. second predetermined pressure: 2 bar.

As it has been already mentioned, the assembly according to the invention may be of usage on aircrafts. Regarding the operation of the aircraft, the following pressure ranges normally takes places:
- between 0,7 bar and 1 bar, it is the expected ambient pressure inside the aircraft in case of a malfunction of the battery cell,
- between 1,1 bar and 2, 2 bar, the second predetermined pressure valve of the protective device is expected to open; and
- above 2,2 bar inside the battery cell, it is expected the first predetermined pressure valve to open.

In a third inventive aspect, the invention provides an aircraft comprising a protective device according to any of the embodiments of the first inventive aspect and a battery cell, or an assembly according to any of the embodiments of the second inventive aspect.

All the features described in this specification (including the claims, description and drawings) and/or all the steps of the described method can be combined in any combination, with the exception of combinations of such mutually exclusive features and/or steps.

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.
- Figures 1a-1b: These figures show a conventional battery cell in use in case a malfunction, wherein its overpressure venting valve works as expected and when it fails, respectively.
- Figure 2: This figure shows a particular example of an assembly according to the invention.
- Figure 3a-3b: These figures show an schematic view of the assembly according to the invention where the battery cell has a malfunction and its overpressure venting valve works as expected and fails, respectively.
- Figure 4: This figure shows a perspective view of an assembly according to the invention, wherein the assembly has a longitudinal cutoff, thus showing a half of the assembly.
- Figure 5a-5b: These figures show different views of the assembly according to the invention, wherein the cylindrical casing of the jacket is hidden (i.e. it is not shown) for illustrative purposes.
- Figure 6: This figure shows a particular example of an aircraft according to the invention.

### DETAILED DESCRIPTION OF THE INVENTION

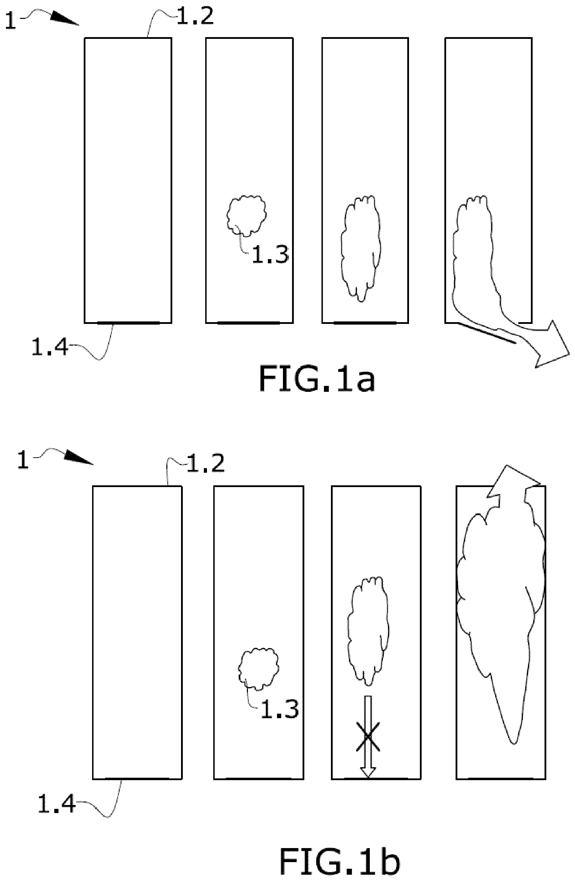

Figures 1a and 1b depict the sequence followed by a conventional battery cell (1) in case a malfunction has taken place, and its overpressure venting valve (1.4) works as expected (in figure 1a) and when it fails (in figure 1b), respectively.

As it was already mentioned, battery cells (1) usage on aircrafts are subject to malfunctions either caused by inherent damage of the cell or induced by external factors (external threats). In short, all those reasons provoke an internal increase of temperature of the battery cell (1), which modifies the electrochemical material (1.3) into high temperature and pressure gas.

In particular, Figure 1a shows the venting of the hot gas (1.3) in a sequence of four images corresponding to different time-steps. The battery cell (1) comprises two electrical terminals (not shown in these schematic views) and a can (1.2) which houses the electrochemical material thereof. Additionally, the battery cell (1) comprises a second overpressure venting valve (1.4) configured to release the electrochemical material -converted into high temperature and pressure gas by a malfunction of the battery cell (1)- under a second predetermined pressure. This is, once the pressure of the hot gases reaches the second predetermined pressure inside the can (1.2), the second overpressure venting valve (1.4) is configured to release the same.

Left (*first*) image corresponds to a situation in which the battery cell (1) works without alterations. Nevertheless, the next image (*second*) shows that a malfunction (induced somehow) has taken place in the battery and the electrochemical material (1.3) has been converted into gas by an increase of the temperature inside the can (1.2), accordingly. Third image shows that the generated heat and overpressure inside the can (1.2) of the battery cell has surpassed a temperature security level, and therefore a chain reaction has been triggered. For Li-ion battery cells, this temperature security level is about 80°C.

Fourth image of figure 1a shows the final time step in which the 'thermal runaway' gives rise a pressure inside the can (1.2) at least equal to a second predetermined pressure, which activates the second overpressure venting valve (1.4) of the battery cell (1). Thus, the hazardous gases (1.3) are released to a conditioned zone (3) in order to be evacuated.

Figure 1b shows the same battery cell (1) as in Figure 1a also in a sequence of four images corresponding to different time steps, but wherein the second overpressure venting valve (1.4) fails (or misbehaves) not allowing the high pressure and temperature gases (1.3) to be released. In particular, the first two images are the same as the first two images in Figure 1a.

Nevertheless, third image shows that the hazardous gases (1.3) produced by the 'thermal runaway', once reached the second predetermined pressure and trying to escape by the second overpressure venting valve (1.4), find that the later does not activate. It is to be noted that, conventional battery cells (1) are designed to internally route the generated gases (1.3) to the second overpressure venting valve (1.4).

Finally, fourth image shows that the generated gases (1.3) cannot reach the second overpressure venting valve (1.4), either by misbehavior of the same or by a fault in the internal routing. Thus, the gases escapes from the can (1.2) by the weakest mechanical area thereof giving rise to a destructive result of the structural integrity of the can (1.2).

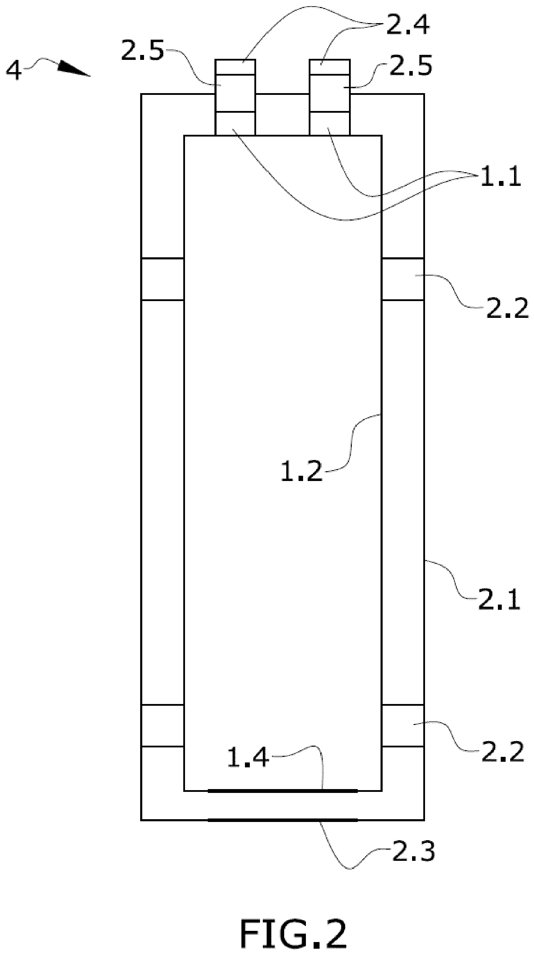

Figure 2 depicts an assembly (4) comprising a battery cell (1) and a protective device (2). The battery cell (1), of the type of a Li-ion battery cell (1), comprises two electrical terminals (+) and (-) (1.1), a can (1.2) housing electrochemical material (1.3), and a second overpressure venting valve (1.4).

On the other hand, the protective device (2) comprises a metallic jacket (2.1) around the can (1.2) of the battery cell (1) in order to airtighly cover it, a set of spacers (2.2) arranged between said jacket (2.1) and the can (1.2), and a venting mechanism (2.3), of the type of an overpressure venting valve (1.4).

Also, each of the two electrical terminals (+) and (-) of the battery cell (1) are attach to a single electrical prolongations (2.4) which allows stretching the electrical connection in order to reach respective external connectors (not shown). To do so, the length of each electrical prolongation (2.4) protrudes out from a top cover (2.1.1) of the jacket (2.1).

It is to be noted that the top cover (2.1.1) of the jacket offsets from the can (1.2) in order to give additional separation at the top end of the battery cell (1). Likewise, the bottom end of the can (1.2) (i.e. where the second overpressure venting valve (1.4) is arranged) also offsets from a bottom cover (2.1.2) of the jacket (2.1).

In addition, the protective device (2) comprises an electrical insulator (2.5) arranged in the interface between the top cover (2.1.1) of the jacket (2.1) and the electrical prolongation (2.4) in order to prevent their direct contact. In this particular example, the protective device (2) comprises one electrical insulator (2.5) for each of the electrical prolongations (2.4).

Each electrical insulator (2.5) airtightly contacts the top cover (2.1.1) of the jacket (2.1) for preventing the hot gases (1.3) to escape from the interface in the terminals (1.1) area, between the electrical prolongation (2.4) and the top cover (2.1.1).

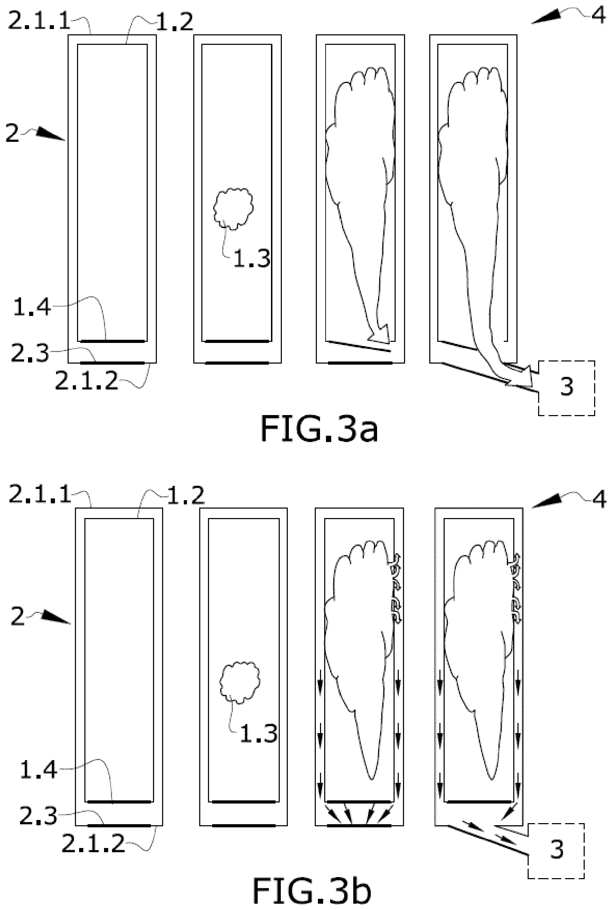

Figures 3a and 3b depict the sequence followed by the assembly (4) in case a malfunction has taken place in the battery cell (1), and its overpressure venting valve (1.4) works as expected and when it fails, respectively. In short, the assembly (4) shown in the following figures is as the one shown in Figure 2.

These figures (figures 3a and 3b) shows a similar battery cell (1) as in Figures 1a and 1b also in a sequence of four images corresponding to different time-steps, but further comprising the protective device (2). In particular, the first two images of figures 3a and 3b are the same between them, and are also similar to the ones shown as the first two images in Figure 1a or 1b, but further comprising the protective device (2).

Particularly, left (*first*) image of figures 3a and 3b corresponds to a situation in which the battery cell (1) works without alterations, the next image (*second*) shows that a malfunction has taken place being the electrochemical material (1.3) converted into gas by an increase of the temperature.

In Figure 3a, third image shows that the generated heat and overpressure inside the can (1.2) of the battery cell has surpassed the temperature security level (being the chain reaction triggered, accordingly). As the pressure inside the can (1.2) has reached the second predetermined pressure, the second overpressure venting valve (1.4) of the battery cell (1) has been activated, and the hazardous gases (1.3) exits the can (1.2) in a controlled manner. In this situation, such hazardous gases (1.3) enter into the separation between the jacket (2.1) and the can (1.2) of the battery cell (1) and accumulate therein.

Fourth image shows how the hazardous gases (1.3) (after fulfilling a predetermined condition) are released by the venting mechanism (2.3) of the protective device (2) in a controlled manner.

On the contrary, in Figure 3b, third image shows that the hazardous gases (1.3) still inside the can (1.2) upon reaching the second predetermined pressure and trying to escape by the second overpressure venting valve (1.4), find that the later does not activate. Optionally, there may be a fault in the designed internal routing of the hazardous gases (1.3), which pose the same result, this is, the second overpressure venting valve (1.4) not to be activated.

In this situation (third image) gases (1.3) escapes from the can (1.2) by the weakest mechanical area thereof giving rise to a destructive result of the structural integrity of the can (1.2). Nevertheless, the hazardous gases (1.3) are contained by the jacket (2.1) undergoing an expansion produced by the volume increase, and thus their thermodynamic properties are reduced. As more gas leaves the can (1.2), more accumulates within the separation settle by the spacers (not shown in these figures).

Finally, fourth image shows that the accumulated gases (1.3), insofar fulfills a predetermined condition, are released by the venting mechanism (2.3) of the protective device (2) in a controlled manner. In this particular example, the venting mechanism (2.3) is a first overpressure venting valve adapted to release the electrochemical material under a first predetermined pressure.

It is to be noted that, the first predetermined pressure of the gases (1.3) accumulated within the separation is less than the second predetermined pressure.

In a preferred embodiment, the venting mechanism (2.3) is connected to a guiding means adapted to guide the hazardous gases towards an intended exhaust zone (3) - *placed outside the protective device* (2) - in a controlled and safely manner. In these figures, an schematic representation of such intended exhaust zone (3) and guiding means are shown for illustrative purposes.

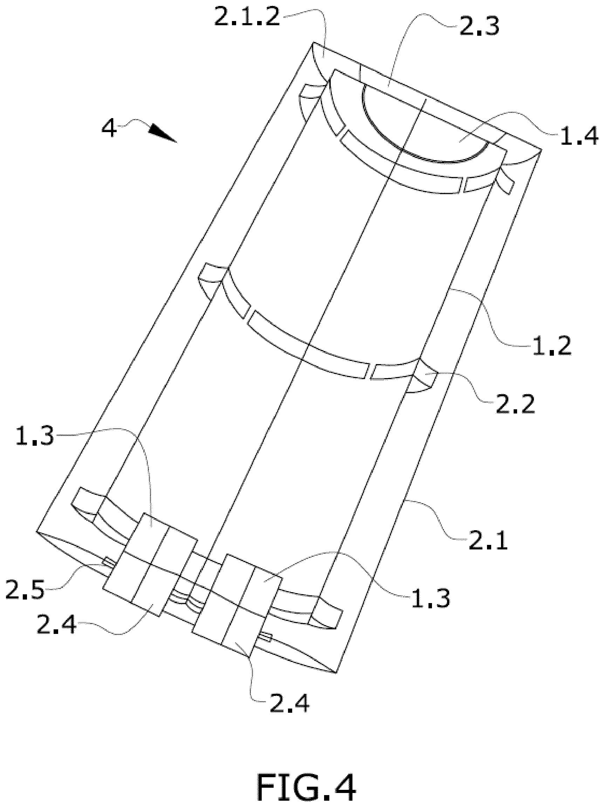

Figure 4 depicts a perspective view of an assembly (4) with a longitudinal cutoff, thus only showing a half of the same. Briefly, this assembly (4) comprises the same elements as those described in Figure 2.

Attention is drawn to the fact that the jacket (2.1) is larger than the can (1.2) for assuring the airgap, which further acts as a decompression chamber. In addition, the first (2.3) and second (1.4) overpressure venting valves are arranged one over the other, in order to minimize the accumulation of hazardous gases (1.3) in case both valves work correctly.

Besides, the protective device (2) comprises three ring-shaped spacers (2.2) securely embracing the can (1.2) of the battery cell (1). In particular, one ring-shaped spacer (2.2) is arranged close to the top cover (2.1.1), other one close to the bottom cover (2.1.2), and the third one approximately in the middle section of the can (1.2).

Additionally, it can be observed that each ring-shaped spacer (2.2) comprises various circular cutouts (2.2.1) on its external periphery, thus each forming a teeth profile. Those cutouts are homogeneously distributed over each ring-shaped spacer (2.2) and pass through them. However, among the three ring-shaped spacers (2.2), it is not necessary that each cutout corresponds between them, and therefore they can be angularly displaced between each other.

Alternatively, each ring-shaped spacer (2.2) may be split into different arcs.

The electrical insulator (2.5) comprises a hollow tubular element intended to airtightly attach the electrical prolongation (2.4). Besides, the electrical insulator (2.5) comprises two adjacent peripheral ledges intended to clamp the top cover (2.1.1). These adjacent peripheral ledges also allow securing the upper separation or offset between the top cover (2.1.1) and the can (1.2).

In a preferred embodiment, an electrical insulator (2.5) is manufactured as a single body within an electrical prolongation (2.4).

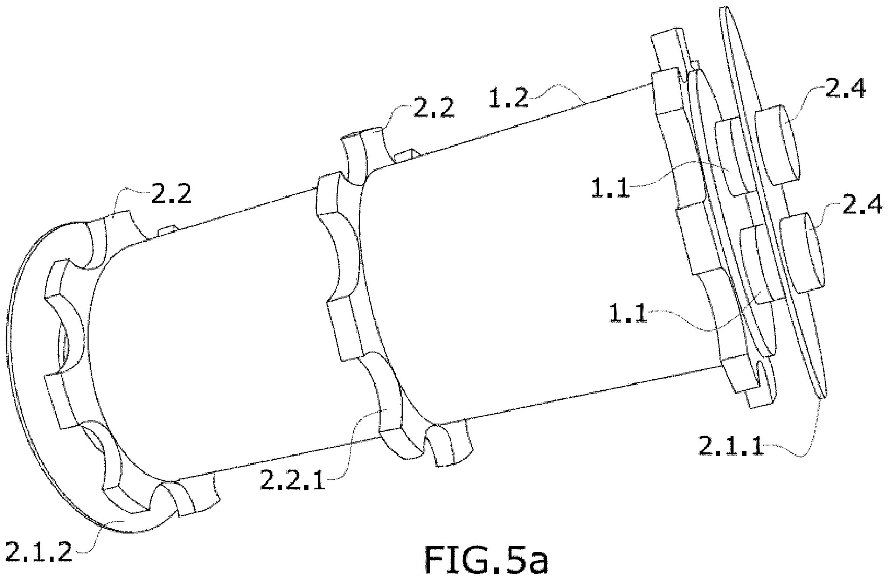

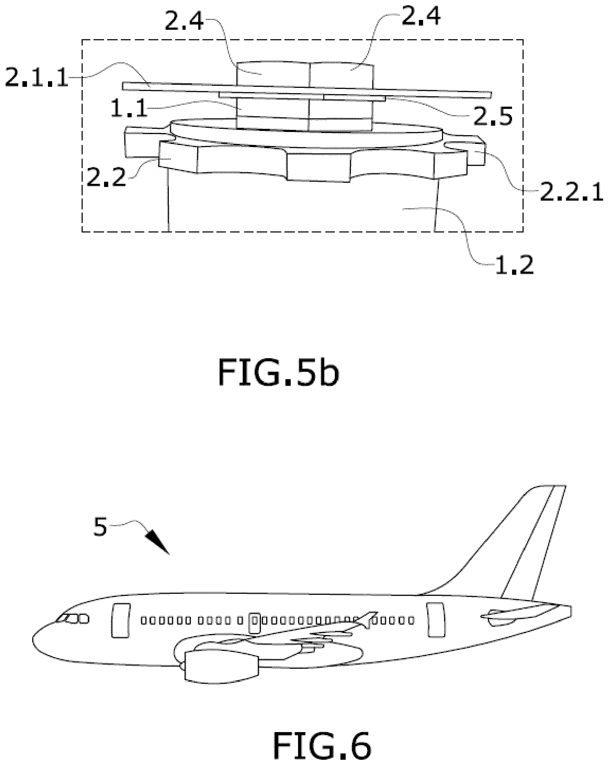

Figures 5a and 5b show the assembly (4) according to the invention, wherein the cylindrical casing (2.1.3) of the jacket is intentionally hidden for illustrative purposes. Hence, only the top cover (2.1.1) and the bottom cover (2.1.2) of the jacket (2.1) are left.

In these figures, it can be appreciate with more details the teeth profile of the ring-shaped spacers (2.2) shaping the hidden cylindrical casing (2.1.3) of the jacket, and their relative positioning.

Further, Figure 5b is a detailed view of the top zone of the assembly (4), where the connection between electrical terminals (1.1), electrical prolongations (2.4), electrical insulator (2.5), and the top cover (2.1.1) of the jacket takes place.

Figure 6 depicts a particular example of an aircraft (5) comprising a protective device (2) and a battery cell (1), or an assembly (4).

## Claims

1. A protective device (2) for a battery cell (1), the battery cell (1) comprising electrical terminals (1.1) and a can (1.2) which houses the electrochemical material thereof, the protective device (2) comprising:
• a jacket (2.1), preferably metallic, adapted to airtighly cover the can (1.2) of the battery cell (1),
• at least one spacer (2.2) arranged between the jacket (2.1) and the can (1.2) of the battery cell (1), wherein the at least one spacer (2.2) is configured to maintain a separation therebetween, and
• a venting mechanism (2.3) adapted to release the electrochemical material under a predetermined condition.

2. The protective device (2) according to claim 1, wherein
the jacket (2.1) comprises a top cover (2.1.1), and
the protective device (2) further comprises electrical prolongations (2.4), each of them adapted to attach single electrical terminal (1.1) of the battery cell (1), and wherein the length of each electrical prolongation (2.4) allows protruding out of the top cover (2.1.1) of the jacket (2.1).

3. The protective device (2) according to claim 2, further comprising an electrical insulator (2.5), the electrical insulator (2.5) being arranged in the interface between the top cover (2.1.1) of the jacket (2.1) and at least one electrical prolongation (2.4) in order to prevent their direct contact, preferably the protective device (2) comprising an electrical insulator (2.5) for each of the electrical prolongations (2.4).

4. The protective device (2) according to any of the previous claims, wherein the venting mechanism (2.3) is a first overpressure venting valve adapted to release the electrochemical material under a first predetermined pressure upon accumulation in the separation between the jacket (2.1) and the can (1.2) of the battery cell (1).

5. The protective device (2) according to any of the claims 1 to 3, wherein the venting mechanism (2.3) is a hinged flap adapted to co-jointly open with the opening of an overpressure venting valve of the battery cell (1) in order to release the electrochemical material of the battery cell (1).

6. The protective device (2) according to any of the previous claims, wherein the at least one spacer (2.2) is a ring-shaped spacer adapted to securely embrace the can (1.2) of the battery cell (1).

7. The protective device (2) according to any of the previous claims, wherein the at least one spacer (2.2) comprises at least one cutout (2.2.1) configured to allow the electrochemical material to pass through it.

8. The protective device (2) according to any of the previous claims, wherein the at least one spacer (2.2) is made of one of the followings:
metallic material, or
polymeric material, or
reinforced polymeric material.

9. The protective device (2) according to any of the previous claims, wherein the at least one spacer (2.2) is made of a flexible material configured to swell upon contacting the accumulated electrochemical material between the jacket (2.1) and the can (1.2) of the battery cell (1), the separation therebetween being increased.

10. The protective device (2) according to any of the previous claims, wherein the venting mechanism (2.3) is adapted to release the electrochemical material towards an intended exhaust zone (3) outside the protective device (2).

11. An assembly (4) comprising:
a protective device (2) according to any of claims 1 to 10, and
a battery cell (1), preferably a Li-ion battery cell (1), the battery cell (1) comprising electrical terminals (1.1) and a can (1.2) which houses the electrochemical material thereof.

12. The assembly (4) according to claim 11, wherein the battery cell (1) further comprises a second overpressure venting valve (1.4) configured to release the electrochemical material converted into high temperature and pressure gas by a malfunction of the battery cell (1) under a second predetermined pressure.

13. The assembly (4) according to claim 12 wherein the protective device (2) is according to claim 4, wherein the first predetermined pressure of the electrochemical material accumulated within the separation configured to open the first overpressure venting valve (2.3) is less than the second predetermined pressure configured to open the second overpressure venting valve (1.4).

14. The assembly (4) according to claim 13, wherein the ratio between the first predetermined pressure and the second predetermined pressure is between 0,75 to 0,5.

15. Aircraft (5) comprising a protective device (2) according to any of claims 1 to 10 and a battery cell (1), or an assembly (4) according to any of claims 11 to 14.
